# EUROPEAN PATENT APPLICATION

(11) **EP 2 857 461 A1**
(43) Date of publication of application: **08.04.2015**
(21) Application number: 12877735.6
(22) Date of filing: 29.08.2012
(51) Int. Cl.: C09D 5/14

(54) **PHOSPHOGYPSUM-BASED ENVIRONMENTALLY FRIENDLY PAINT**

(30) Priority: 30.05.2012 BR 102012012961
(71) Applicant: Estevam Domingos, Gabriel, 11718-370 Praia Grande - SP (BR)
(72) Inventor: Estevam Domingos, Gabriel, 11718-370 Praia Grande - SP (BR)
(74) Representative: Fletcher, Matthew James Edwin
(86) International application number: PCT/BR2012/000320
(87) International publication number: WO 2013/177637

(57) **Abstract**

The invention relates to a phosphogypsum-based acrylic paint, pertaining to the field of industrial chemistry; despite phosphogypsum being reused in the production of materials for premoulded construction, owing to the high level of phosphogypsum waste generated, the current market is not capable of reutilizing the substance adequately; with a view to resolving this drawback, the subject matter of the present application was developed, which is constituted by a micronized phosphosypsum-based acrylic paint (CaSO₄ NH₂O), which has the following chemical composition (100% (one hundred per cent) weight per cent), in the following order: 1 - water, 47.850 per cent; 2 - wetting agent, 0.200 per cent; 3 - dispersing agent, 0.400 per cent; 4 - antifoam, 0.100 per cent; 5 - bactericide, 0.200 per cent; 6 - sodium nitrite, 0.030 per cent; 7 - phosphogypsum (from 5 to 10 µm), 40.000 per cent; 8 - mixing substances 1 to 7 for two minutes; 9 - alcalinizing agent, 0.350 per cent; 10 - pigment, 2.500 per cent; 11 - butyl glycol, 0.750 per cent; 12 - white spirit, 1.200 per cent; 13 - dispersion for 20 (twenty) minutes, etc.

## Description

### Field of the invention

The present invention deals with the field of industrial chemistry and relates to an innovative paint chemical composition produced from phosphogypsum resulting from any process, such as residual by-product of the fertilizer industry.

Phosphogypsum is accumulated in the open air as a stocking pile and obtained as a by-product from the production of phosphoric acid, a raw material for the production of phosphatized fertilizers.

Generally, phosphogypsum is composed chiefly by gypsum, that is, di-hydrated, hemi-hydrated or hydrated calcium sulfate (CaSO₄ nH₂O), which has, as impurities: fluorides, phosphates, organic matter and minerals such as aluminum and iron, heavy metals and radionuclides (Luther et al, 1993). These impurities make the difference between gypsum and phosphogypsum, besides causing environmental restriction to disposal and applications of phosphogypsum (Canut, 2006).

Phosphogypsum of any specification may enter as an addition chemical element in the manufacture of acrylic paints, and thus aid in recycling the product as a disposal material.

It is an objective of the present patent application to provide an ecological paint composition based on phosphate, with low cost for industrial feasibility thereof, coupled with requirements of reliability and use convenience, which, unlike traditional paints found on the market, is provided with numberless possibilities and benefits, becoming a product of great expectation and acceptance on the sector market.

### Background of the invention

The large amount of residues generated by fertilizer industries in Brazil and in the world, as well as their impacts caused to the environment, makes it more and more necessary to carry out studies and researches that enable one to reduce, recycle and reuse these residues.

In this context, there is a residue that requires special attention, called phosphogypsum (chemical gypsum), a co-product or by-product of fertilizer industries that is generated from the product of phosphoric acid, a raw material for the product of phosphatized fertilized (Canut, 2006).

The process of producing phosphogypsum takes place through two types of industrial processes, namely: hot and wet (Rutherford, 1993 apud Santos, 2002).

Generically, the hot process employs electric energy by reducing calcium phosphate with coke in the presence of silica at high temperatures, in order to produce elementary phosphorus, which then is oxidized to P₂O₅, which reacts with water to form high-purity phosphoric acid (Rutherford, 1993, apud Santos, 2002).

The wet process is the most employed one in fertilizing industries. According to Becker, 1989, this process represents 90% of the phosphoric acid producing facilities in the world. The production thereof consists basically in dissolving the phosphate rock concentrate with strong acids, the use of sulfuric acid standing out at present (Rutherford, 1993, apud Santos 2002). As a result of the different reaction temperatures, phosphogypsum produced through wet process may exhibit three different forms: di-hydrated, hemi-hydrated and anhydrous.

According to Ortiz (1997), cited by Matos 2011, the basic differences between the three processes are the concentrations of phosphoric acid resulting therefrom, the dissolution velocity of the phosphate rock and the filtration process.

In a general way, phosphogypsum is composed chiefly by gypsum, that is, calcium di-hydrated, hemi-hydrated or hydrated (CaSO₄ nH₂O), which has, as impurities: fluorides, phosphates, organic matter and minerals such as aluminum and iron, heavy metals and radionuclides (Luther et al, 1993). These impurities make the difference between gypsum and phosphogypsum, besides causing environmental restriction to the disposal and application of phosphogypsum (Canut, 2006).

Phosphoric acid is an intermediate product employed in making phosphatized fertilizers such as "MAP", "DAP" and "TSP". This input is obtained through a process known as wet pathway. One of the steps of this wet pathway involves reacting the phosphate rock (obtained from mines) with sulfuric acid in an aqueous medium, generating phosphoric acid and the by-product phosphogypsum (Promom, 2011).

The production process may be defined through Equation (1) below (Malavolta, 1992, apud Canut, 2006).

Ca₁₀(PO₄)₆F₂ + H₂SO₄ + 20 H2O → 10 CaSO₄.2H₂O + 6 H₃PO₄ + 2H; wherein:
Ca₁₀(PO₄)6F₂: Apatite;
10 H₂SO₄: Sulfuric acid;
20 H₂O: Water;
CaSO4. 2H₂O: Phosphogypsum;
6H₃PO₄: Phosphoric acid;
2HF: Hydrofluoric acid.

Phosphogypsum generated in Brazil, as well as the mother rock that give rise to the residue, exhibits low levels of natural radioactivity, low maximum limit fixed by the "USEPA", according to measurements made and the object of various published papers (JACOMINO, 2003; SILVA, 2001; FREITAS, 1992; MAZZILI et al., 2000 apud Canut, 2006). The fact that the Brazilian phosphate rock has high thorium content may explain the low levels of ²²²Rn exhalation, and it is pointed out that the contents of radionuclides existing in the rock is quite influenced by the geologic characteristic thereof at the extraction place (Canut, 2006).

According to Mazzili (2005), cited by Canut (2006), the radioactivity measured in phosphogypsum is of the same magnitude as those observed in fertilizers, a fact that makes it feasible to reuse phosphogypsum as input applicable to the civil construction.

However, by virtue of the little information available on phosphogypsum produced by the Brazilian industries, more detailed studies on the radiologic characterization of phosphogypsum are necessary.

According to a bibliographic survey, for each ton of phosphoric acid produced, 4 to 6 tons of phosphogypsum are generated (Canut, 2006). For this reason, in Brazil the production of this residue reaches over 4.5 million tons a year (Mazzili, 2000 apud Canut, 2006). The main factories that produce phosphoric acid by wet process are located in the Southwest Regions (Uberaba - MG - 675,000 t/year, Cubatão - SP - 128,000 t/year, Cajati - SP - 180,000 t/year) and West-Central Region (Catalão). However, it is estimated that in Brazil there are about 160 million tons of this material available for use (Promon, 2011).

### Drawbacks of the prior art

Because of this high generation rate, the present-day market is not capable of reusing the product as it should. At present, only 15% of the phosphogypsum generated in the world is recycled. The remaining 85% are generally disposed of without treatment (Tayibi et al., 2009). Among the reuses thereof are: materials for building pre-molded articles such as: blocks, floors, plates for ceilings and partitions; manufacture of cement; manure complement and soil conditioner.

In some undertakings around the world, one has been practicing direct disposal the phosphogypsum into the oceans, but such procedures are not accepted any longer, and one has been facing restrictions to grant of financial support by international entities. In Brazil, the disposal thereof is made in open-air piles, which involves activities of significant cost such as preparing the ground according to the resolution of the Conselho Nacional do Meio Ambiente (Conama) (National Council for the Environment), handling the material with the aid of conveyor shovel, tractors and dumper-trucks (Promon, 2011). On the other hand, from the environmental point of view this type of disposal may cause contamination of the atmosphere, soil and underground waters.

In this scenario, the reuse of this residue as raw material and alternatives to obtaining new products, especially civil construction products have been gaining great importance on the world market, since generally this influences directly the reduction in the consumption of virgin raw materials, reduction of environmental liabilities, adaptation of the environmental legislations in force, etc.

The disposal of phosphogypsum in the environment is a complex problem and involves issues of economic, environmental and legislative nature. The alternatives to disposal used are disposal into rivers and oceans or as piles close to factories (Schultz et al., 1991).

The most suitable way of disposing such residue depends on the availability and cost of appropriate areas, as well as on the location of the phosphoric acid factories and, finally, on the environmental legislation in force.

The disposal in areas close to factories is the most common way of disposing phosphogypsum, and it is often adopted almost throughout the world. In this situation, there are two alternatives: either "wet" or "dry" (Canut, 2006).

The final disposal carried out by the "wet" procedure is the most common, wherein phosphogypsum is disposed together with the residual water from the industrial unit in the form of pulp, through pumping into sedimentation lagoons, where it is allowed to settle out and, after drying, it is accumulated to piles in areas designed for this purpose (Freitas, 1992 apud Canut, 2006).

The final process of stocking phosphogypsum residue is always accompanied by high expenditures for the companies. The disposal in piles almost always requires availability of large areas, which, depending on the price of the lands, may raise the disposal prices too much (Freitas, 1992 apud Canut, 2006). By requirement of environmental agencies, one should carry out an waterproofing and structural project of the piles, so as to prevent possible accidents at the place. The monitoring of the piles by specialized professionals is also necessary. The stocking areas should preferably be located close to the factories; otherwise the operational expenditure may be up to five times as high (Freitas, 1992 apud Canut, 2006).

According to Resolution 307/02 of the "CONAMA" (2002), the generator must guarantee confinement of the residues after retaining the residues after generation until the transportation step, ensuring, in all possible cases, the reuse and recycling condition.

According to the "Promon" (2011), the manufactures were implanted about 20 years ago in regions where the issue of occupation of space with gypsum deposits was not a problem. At present, with the growth of the cities close to these facilities, the issues of immobilization and shortage of land have become more relevant as a result of advance of urbanization around the factories. Coupled to this, there are the environmental restrictions on the construction of this type of disposal, imposed by the risk which this represents to the underground aquifers existing in the region of influence.

### Summary of the invention

The needs pointed out above, with a view to reuse the phosphogypsum raw material from multiple processes, with significant contribution to the quality of the environment and further generate income source with the production of acrylic paints from the stocked phosphogypsum, have led the inventor, who know the sector very well, to create and develop the object of the present patent, entitled "PHOSPHOGYPSUM-BASED ECOLOGICAL PAINT", which has a formulation of acrylic paint containing the conventional materials for making the paint, as well as phosphogypsum added to its composition.

In general, the paint may be considered a stable mixture of a solid part (which forms the film adhering to the surface to be painted) in a volatile component (water or organic solvents). A third part called additives, although it represents a minor percentage of the composition, accounts for the achievement of important properties in both the paints and the coating (Produção + Limpa, 2006).

The paint is a preparation, which means that there is a mixture of various inputs into the production thereof. The combination of the solid and volatile elements defines the properties of resistance and aspect, as well as the type of application and the cost of the final product (Produção + Limpa, 2006).

There are various types of paints, such as: oil paints, plastic paints, texturized paints, acrylic paints, colored rubber paints, epoxy paints, among others. Among these, acrylic paints, which is the focus of this patent application, stands out on the market by virtue of the demand for it in real estate application.

For the development of the research, one has acquired chemical products necessary to formulate conventional acrylic paints, such as: dispersing agent, wetting agent, anti-foaming agent, bactericide, fungicide, sodium nitrite, agalmatolite, micronized calcite, calcium carbonate, butyl glycol, mineral turpentine and pigments.

The phosphogypsum used in the project came from the company Vale Fertilizantes, located in the municipality of Cubatão/SP, the production process of which is by wet pathway and di-hydrated, having heterogeneous granulometry ranging from about 0.04 to 0.09 mm in diameter.

The collection of samples of phosphogypsum was made by the company itself, where one collected and made available an amount of 40 kg of the residue, distributed in two 20-kg sacks.

### Detailed description of the invention

According to above descriptions, the "PHOSPHOGYPSUM-BASED ECOLOGICAL PAINT" employs inputs common to paints that are traditionally marketed.

For the development of the research, one used the following chemical products required to formulate conventional acrylic paints: resin, dispersing agent, wetting agent, anti-foaming agent, bactericide, fungicide, sodium nitrite, agalmatolite, micronized calcite, calcium carbonate, butyl glycol, mineral turpentine and pigments.

### Resin:

Resins form the paint film and account for most of the physical and chemical characteristics of the pain, since they determine brightness, chemical and physical resistance, drying, adherence, and others. The first paints developed employed resins of natural origin (chiefly vegetable). At present, with the exception of artistic works, the resins employed by the paint industry are synthetic ones and constitute compounds of high molecular weight.

Thus, the resin employed is an anionic aqueous dispersion of an acrylic-styrenated copolymer with small particle size.

It is used as a binder in the manufacture of latex paints, acrylic Spackle paste, textures, grafiato-type textures, glue for granilha-texturizer and varnishes for stones, bricks. Their main characteristics in the paints are:
- it provides good resistance to absorption of water;
- washability;
- it generates brightness in the paints;
- it has capability of dispersing pigments;
- it forms film that protects the paints;
- it is water-soluble;
- its basic specifications are: solids: 48 - 50%; Brookfield Viscosity: 6000 - 12000 cps (*); pH: 8.0 - 9.5; density at 20°C: 1.035 - 1.055 g/cm³ (*); dispersant.

The dispersant, as the name itself indicates, acts on the solid-liquid dispersion of the paint, providing a suspension of homogeneous consistency. Thus, the dispersant used is an acrylic-maleic sodic copolymer in aqueous solution, which imparts high-concentration dispersions with low viscosities and optimum stability. It has the following characteristics:
- good Dispersant X Fillers/Pigment ratios;
- good stability in the final paint, without significantly altering its retention viscosity;
- it is much used as filler and pigment dispersant in paints and/or concentrates;
- it is soluble in water at any proportion;
- affinity for systems of low, medium or high alkalinity;
- its basic specifications are: non-volatile (N.V.): 44 - 45%; Brookfield Viscosity: <400 cP; pH at 20°C: 1.15 - 1.25 g/cm³; the wetting agent is an agent capable of breaking the interface tension of mineral fillers and inorganic pigments, causing the water and other additives to penetrate more easily the particle. Therefore, its actuation improves the wetness of the minerals, fluidizing the mass and preventing the product from altering the final characteristics over the time. Thus, the wetting agent employed is composed of a mixture of hydrocarbons and modified vegetable oils, having the following characteristics:
- improvement of the application onto the wall, since it improves the penetration thereof;
- low odor;
- low use dosages;
- it does not form foams;
- basic specifications: Active content %: 24-28; Aspect: limpid liquid of clear amber color; density at 20°C: 0.900 - 1.100 g/cm³; pH (aqueous solution at 10°C p/pl, 25°C): 6.00 - 9.00; solubility: water-soluble; anti-foaming agent: The anti-foaming agent, as the name itself indicates, is a compound developed to inhibit and control the formation of foams in water-based paints, emulsions, dispersions, suspensions, among others.

Its stable formulation, without phase separation, and balanced with surfactants and hydrophobic particles that impart to it excellent performance in the manufacture of paints or emulsions in general, as well as control of formation of air bubbles during application of the water-based paints, thus preventing the appearance of cracks in the dried film

By employing an anti-foaming agent, one achieves an excellent immediate breaking of the foam, as well as better occupation of the space within the paint package, thus increasing the weight per unit.
Basic specification: Aspect: yellow opaque liquid without decantation; specific weight (25°C): 0.800-0.900; wetness (Karl Fischer) 5: 0.5 max; Gardner viscosity (25°C): Z Max; flash point (°C): 140 min; bactericide.

Coating formulations such as paints, textures, primer, enamels, varnishes, Spackle paste, among others, are subject to microbial contamination. This contamination may take place in both the package and the dry film. The microorganisms may cause alterations in color, odor, phase separation, formation of gases and change in pH, besides impairing characteristics such as covering and brightness. The use of microbicides guarantees good protection in both the package (in-can) and dry film.

In this context, the bactericide or microbicide is composed by hemiacetal and isothiazolinones, water-soluble and has a broad spectrum in the microbiological activity against gram-positive and gram-negative bacteria, fungi and yeasts. The interaction of its components results in a synergistic action, ensuring rapid initial disinfection (fast kill), as well as good preservation activity of long duration in the package.

Basic specifications: stable compound at pH of 3 to 11 and at temperatures of up to 60°C; aspect: transparent and slightly blurred, colorless to slightly yellowish; specific weight (25°C): 1.080 - 1.140 g/cm³; refraction rate (22°C): 1.3780-1.3840; pH, solution 1% in water: 5.9 - 7.4; fungicide: the fungicide-algicide is used for protecting the paint films, to prevent attack by fungi.

For this purpose, the fungicide used is a stable aqueous dispersion of heterocyclic compounds with isothiazolinones and benzimidasol derivatives.

Basic specifications: Aspect: creamy, white clear beige liquid; specific weight: 1.000 - 1.080 g/cm³; pH: 5.0 - 7.0; sodium nitrite; sodium nitrite (NaNO₂) is a chemical compounds used in paints as an anti-corrosive and color-fixing additive.

Basic specifications: physical state: solid/granulate; color: white; odor: odorless; pH: 8 - 9, 20 °C; molecular weight: 85.0; solubility (water at 20°C): 900 g/L; density: (20°C): 2.1 g/cm³; butyl glycol.

Butyl glycol, the generic name attributed to the organic solvent of the family of glycol esters, has the chemical name of: monobutyl ether of monoethylene glycol and has the following formula: C₆H₁₄O₂.

Basic specifications: pH: does not apply; boiling point: 171.2°C [10]; melting point: -74.8°C [11]; flash point: 65.5 °C (CF)[10]; self-ignition temperature: 244°C [10]; explosiveness limits (lower - upper): 1.1% vol. at 93°C - 12,7% vol. at 135°C (1-a); vapor pressure: 0,08 kPa (20°C) [10]; vapor density: 4.6 (with respect to air); density: 0.901 g/mL (20°C); solubility: complete, water-soluble (20°C); viscosity: 3.36 mPa.s.; mineral turpentine: mineral turpentine is a solvent usually employed in paints. Its composition comes from a mixture of aliphatic hydrocarbons, with distillation range from 148 to 240°C.

Basic specifications: distillation range: 148 - 216°C; initial boiling point at 151°C; final boiling point: 216C (max.); flash point (20/4C): 0.774 g/cm³; Kauri-Butanol index: 39; Saybolt color: +21; aliphatics contents: 83.9% vol.; Tolerance Limit (TL/LT): 100 ppm; corrosiveness to copper (3h, 100°C): 1.0 (max.); Aspect: colorless liquid; pigment: for each paint produced, one uses pigments of different characteristics. Thus, the table below shows the pigments used and their main chemical and physical characteristics.

| **CHARACTERISTIC** | **VISCOSITY** | **pH** | **DENSITY** |
|---|---|---|---|
| Black: aqueous dispersion of the black smoke pigment in the presence of wetting agent and dispersing agent | 5000 cP | 8.0 | 1.31 g/mL |
| Green: aqueous dispersion of copper phthalocyanine in the presence of wetting agent and dispersing agent | 300 cP | 9.0 | 1.26 g/mL |
| Blue: aqueous dispersion of copper pigment in the presence of wetting agent and dispersing agent | 300 cP | 9.0 | 1.2 g/mL |
| Red: aqueous dispersion of red iron oxide pigment in the presence of wetting agent and dispersing agent | 6000 cP | 9.0 | 2.00 g/mL |
| Orange color: aqueous dispersion of manoazoic pigment of beta-naphtol series in the presence of wetting agent an dispersing agent | 1000 cP | 8.0 | 1.21 g/mL |
| AS3G Yellow: aqueous dispersion of organic pigment in the presence of wetting agent and dispersing agent | 500 cP | 9.0 | 1.15 g/mL |
| OCRE Yellow: aqueous dispersion of yellow iron oxide in the presence of wetting agent and dispersing agent | 3000 cP | 9.0 | 180 g/mL |

### Thickeners

In order to make the paint thick and viscous, one uses two types of thickeners, the first one is a alkali soluble associative acrylic compound for paints.

This is a thickener of medium thickening power and medium viscosity, compatible with various other types of thickeners and that has good stability in low and medium PVC systems. It is used for the manufacture of semi-bright and opaque, elastomeric, sealing, paints, preparation bottoms and varnishes, being equal of acrylic aqueous and styrenated paints.

Besides, such a product has compatibility with other acrylic, cellulosic and urethanic thickeners. It enables goo film formation and transfer, optimum rheology in aqueous acrylic systems.

Basic specifications: solids: 28 - 30%; Brookfield viscosity: 5 - 15; pH: 1.0 - 3.0; density (20°C): 1.04 g/cm³ Spindle 1/100 RPM.

The other thickener used is also an alkali soluble associative acrylic compound for use as a rheological modifier in acrylic and styrenated aqueous paints. It is a thickener of low thickening power, which exhibits good decrease in sprinkling in applications and has Newtonian fluidity with optimum transfer and leveling. It functions as a rheology modifier in the manufacture of semi-bright opaque acrylic paints, and in acetinated paints when in combination with a medium thickener.

Basic specifications: solids: 29-31%; Brookfield viscosity: 5-15; pH: 3.0-4.0; density (20°C: 1.04 g/cm³ Spindle 1/100 RPM; alkalinizing additive.

The alkalinizing additive is a boron metallic complex, free from heavy metals, used as alkalinizing additive for correcting the pH in water-based paints.

Thus, the alkalinizing additive acts on the paints, raising their pH.

It is an odorless and non-toxic product, which was developed to replace ammoniac and which, besides having an unpleasant smell, is a controlled product. However, it is a low-cost product, which improves the resistance and washability of paints.

Basic specifications: density: 1.18 - 1.25 g/cm³; non-volatile, 20.00 - 30%; solvent: water; refraction %: 32 - 38%; refraction index: 1.350 - 1.450; estimated MP: 360.0; algamatolite.

Algamatolite is a metamorphic rock resulting from the hydrothermal alteration of the mother-rock (protolite) rhyolite.

Algamatolite is constituted chiefly by two minerals, namely pyrophilite and moscovite, as well as other accessory minerals (Luz et al., 2001).

Its inorganic mineral constitution has a predominance of aluminum silicate.

In the paint industry, algamatolite is used chiefly as a filler, since its lamellar characteristic imparts a more uniform surface finish, good covering and improves resistance to washability (or abrasion test), its morphology imparts to it greater resistance to settling, guaranteeing better stability to the system.
Micronized calcite:
The lime used came from calcination and hydration of the mineral dolomite with granulometry that goes through the ABNT no. 200 sieve, the grain diameter of which is of about 0.07 mm with pH 12.
In the possession of all the inputs described above, the tests were carried out, with four samples that composed the table below.

With the foundation of the typical dosages for acrylic paints of the cited chemical components, which were supplied by the respective manufacturers, one carried the experimental procedure of producing the paints.

Thus, the experimental procedure took place by four tests, as follows.

Experimental procedure of the tests for the formulation of ecologic acrylic paints.

The acidic pH of the suspensions had been corrected chiefly by the alkalinizing agent that altered the pH from 3.0 to 9.0, where it remained stable.

| **ORDER** | **PRODUCT** | **TEST 1 (mass %)** | **TEST 2 (mass %)** | **TEST 3 (mass %)** | **TEST 4 (mass %)** |
|---|---|---|---|---|---|
| 1^{st} | Water | 45.900 | 46.000 | 46.000 | 45.400 |
| 2^{nd} | Wetting agent | 0.200 | 0.200 | 0.200 | 0.200 |
| 3^{rd} | Dispersing agent | 0.400 | 0.400 | 0.400 | 0.400 |
| 4^{th} | Anti-foaming agent | 0.100 | 0.100 | 0.100 | 0.100 |
| 5^{th} | Bactericide | 0.200 | 0.200 | 0.200 | 0.200 |
| 6^{th} | Sodium nitrite | 0.030 | 0.303 | 0.303 | 0.303 |
| 7^{th} | Phosphogypsum | 10.000 (gross) | 10.000 (20µm) | 10.000 (10µm) | 10.000 (5µm) |
| 8^{th} | MIXING FOR TWO MINUTES | | | | |
| 9^{th} | Pigment | 2.500 | 2.500 | 2.500 | 2.500 |
| 10^{th} | Calcium carbonate | 5.000 | 3.500 | 1.750 | 0.000 |
| 11^{th} | Algamatolite | 12.000 | 7.900 | 3.750 | 0.000 |
| 12^{th} | Micronized calcite | 12.500 | 8.000 | 3.900 | 0.000 |
| 13^{th} | MIXING FOR TWO MINUTES | | | | |
| 14^{th} | Alkalinizing agent | 0.250 | 0.280 | 0.310 | 0.340 |
| 15^{th} | Butyl glycol | 0.750 | 0.750 | 0.750 | 0.750 |
| 16^{th} | Mineral turpentine | 1.200 | 1.200 | 1.200 | 1.200 |
| 17^{th} | DISPERSING FOR TWENTY MINUTES | | | | |
| 18^{th} | Resin | 7.500 | 7.500 | 7.500 | 7.500 |
| 19^{th} | Fungicide | 0.300 | 0.300 | 0.300 | 0.300 |
| 20^{th} | Anti-foaming agent | 0.150 | 0.150 | 0.150 | 0.150 |
| 21^{st} | MIXING FOR TWO MINUTES AND SLOW ADDITION OF THE THICKENERS | | | | |
| 22^{nd} | Medium viscosity thickener | 0.350 | 0.350 | 0.350 | 0.350 |
| 23^{rd} | Rheological thickener | 0.600 | 0.600 | 0.600 | 0.600 |
| | TOTAL | 100.00 | 100.00 | 100.00 | 100.00 |

In the first test, it was possible to find out the decantation of the bitter phosphogypsum particles and traces of other minerals of uniform texture, as for example silica and iron, thus impairing the homogeneity of the suspension and then the esthetic of the paints applied to the walls. For this purpose, one carried out micronization of the phosphogypsum on a ball mill, which resulted in reduction of its heterogeneous granulation to 10 - 5µm. As a result, there was clearing of the texture, homogeneity of particle treatment and efficiency of suspension.

In this way, from the first test one increased gradually the mass percentage of micronized phosphogypsum of the paints; in the same way the same proportion of the amounts of calcium carbonate, agalmatolite and calcite was reduced. With this replacement of minerals by phosphogypsum in the suspension, it also became necessary to increase the amount of alkalinizing agent for stabilization of the pH from 9 to 9.5.

The time required for the paints to dry at room temperature of 28°C was of two hours and thirty minutes, on average.

Finally, a chemical recombination of the chemistry of the acrylic paints was carried out, replacing all the conventional minerals (algamatolite, calcite and calcium carbonate) with micronized phosphogypsum, with a concentration in the paints of up to 40% by mass.

Through the tests carried for chemical formulation of the paints, the fifth test exhibited better chemical adaptation, mass % rate of phosphogypsum used, esthetic and texture. Therefore, the table below shows the qualitative and quantitative formulation of the ecologic phosphogypsum-based paints.

| ORDER | PRODUCT | (MASS %) |
|---|---|---|
| 1^{st} | Water | 47.850 |
| 2^{nd} | Wetting agent | 0.200 |
| 3^{rd} | Dispersing agent | 0.400 |
| 4^{th} | Anti-foaming agent | 0.100 |
| 5^{th} | Bactericide | 0.200 |
| 6^{th} | Sodium nitrite | 0.030 |
| 7^{th} | Phosphogypsum (from 5 to 10 µm) | 40.000 |
| 8^{th} | MIXING FOR TWO MINUTES | |
| 9^{th} | Alkalinizing agent | 0.350 |
| 10^{th} | Pigment | 2.500 |
| 11^{th} | Butyl glycol | 0.750 |
| 12^{th} | Mineral turpentine | 1.200 |
| 13^{th} | DISPERSING FOR TWENTY MINUTES | |
| 14^{th} | Resin | 7.500 |
| 15^{th} | Fungicide | 0.300 |
| 16^{th} | Anti-foaming agent | 0.150 |
| 17^{th} | MIXING FOR 2 MINUTES AND SLOW ADDITON | |
| 18^{th} | Medium viscosity thickener | 0.350 |
| 19^{th} | Rheological thickener | 0.600 |
| | TOTAL | 100.00% |

The study demonstrated that the net total for the production of the acrylic paints was of R$ 31,34 for the 18l paints, and R$ 6,600 for the 3.6l paint. Thus, one considers a profit margin of 40%.

### CONCLUSION

The objective of providing an innovative form of reusing the phosphogypsum residue was achieved, and the proposed alternative - production of acrylic paints - proved to be of great relevance, with satisfactory results of quality and saving being achieved.

With regard to the study on economic feasibility, the results demonstrated that the production cost of the ecological paints is much below those of similar products. This data, coupled to a solid and promising paint market becomes information indispensable for the feasibility of the project.

However, with the growing demand of the consumer market for products that are sustainable and ecologically correct, even on the civil construction market, where cement, block and ecologic tile already exist, ecological paints may become an attraction and a competitive differential.

In terms of quality, in spite of the need for more specific studies such as: covering power, long-term durability, refraction index, the ecopaints produced proved to be of excellent fixation and esthetic.

For this purpose, there is a need for public and private initiatives for spreading, stimulating and implementing the innovative creation on a commercial scale, as for instance, the creation of synergism with the fertilizer industries and "CDHU", and to carry out the technology presented in popular housing constructions, as foreseen ion the new sustainability policy - utilization of sustainable components in constructions, and/or making use of the paint industries of the region to foster such synergism.

The present specification has dealt with an innovative formulation of phosphogypsum-based ecological paint that exhibits, as can be seen from the analyses carried out, numberless differences over convention paints existing on the market, besides technical and functional characteristics that are completely different from the prior-art ones.

For the advantages presented by the present "PHOSPHOGYPSUM-BASED ECOLOGICAL PAINT", and since it has really innovative characteristics that meet all the requirements of novelty and originality, it meets the necessary and sufficient conditions for receiving a patent of invention.
1. PHOSPHOGYPSUM-BASED ECOLOGICAL PAINT, which is the formulation of a phosphogypsum-based acrylic paint, although phosphogypsum is reused in making materials for pre-molded construction, such as blocks, floors, plates for ceilings and partitions, manufacture of cement, manure complement and soil conditioner, by virtue of the great rate of generation of phosphogypsum residue, the present market is not capable of reusing it properly; at present, only 15% of the phosphogypsum generated in the word, is recycled; the remaining 85% are disposed generally without treatment (Tayibi et al, 2009), in order to solve this drawback, the object of the present patent application has been developed, characterized by a phosphogypsum-based acrylic paint (CaSO4 nH2), which has the following chemical composition in mass % (percent) and in the following order: 1^{st} water 47.850% with variation for more or less 15% (fifteen percent); 2^{nd} wetting agent 0.200 percent with variation to more or less 15% (fifteen percent); 3^{rd} dispersing agent 0.400 percent with variation to more or less 15% (fifteen percent); 4^{th} anti-foaming agent 0.100 percent with variation to more or less 15% (fifteen percent) ; 5^{th} bactericide 0.200 percent with variation to more or less 15% (fifteen percent); 6^{th} sodium nitrite 0.30 percent with variation to more or less 15% (fifteen percent); 7 micronized phosphogypsum (from 5 to 10µm) 40.000 percent with variation to more or less 15% (fifteen percent); 8^{th} mixing for two minutes all the substances from 1^{st} to 7th; alkalinizing agent 0.350 percent with variation to more or less 15% (fifteen percent); 10th pigment 2.500 percent with variation to more or less 15% (fifteen percent); 11^{th} butyl glycol 0.750 percent with variation to more or less 15% (fifteen percent); 12^{th} mineral turpentine 1.200 percent with variation to more or less 15% (fifteen percent); 13th dispersing for 20 (twenty) minutes; 14^{th} resin 7.600 percent with variation to more or less 15% (fifteen percent); 15 fungicide 0.300 percent with variation to more or less 15% (fifteen percent); 16th anti-foaming agent 0.150 percent with variation to more or less 15% (fifteen percent); 17th mixing for 2 (two) minutes and slow addition; 18th medium viscosity thickener 0.350 percent with variation to more or less 15% (fifteen percent); 19th rheological thickener 0.600 percent with variation to more or less 15% (fifteen percent), totaling 100% by mass.

## Claims

1. PHOSPHOGYPSUM-BASED ECOLOGICAL PAINT, **characterized by** comprising from 34.0 to 46.0% phosphogypsum having granulometry ranging from 5.0 to 10.0 µm, from 40.68 to 55.02% water, from 6.37 to 8.62% resin, from 0.17 to 0.23% wetting agent, from 0.34 to 0.46% dispersing agent, from 0.205 to 0.285% anti-foaming agent, from 0.17 to 0.23% bactericide, from 0.0255 to 0.0345% sodium nitrite (NaNo2), from 0.298 to 0.402% of an alkalinizing agent, from 2.125 to 2.875% pigment, from 0.6375 to 0.8625% butyl glycol (C6H14O2), from 1.02 to 1.38% mineral turpentine, from 0.25 to 0.35% fungicide, from 0.12 to 0.17% of an anti-foaming agent, from 0.298 to 0.402% of a medium-viscosity thickener, and from 0.51 to 0.69% of a rheological thickener.

2. The PHOSPHOGYPSUM-BASED ECOLOGICAL PAINT according to claim 1, **characterized in that** the resin comprises an anionic aqueous dispersion of an acrylic styrenated copolymer with Brookfield viscosity ranging from 6000 to 12000 cps, pH ranging from 8.0 to 9.5, and density at 20°C ranging from 1.035 to 1.055 g/cm³.

3. The PHOSPHOGYPSUM-BASED ECOLOGICAL PAINT according to claim 1, characterized ion that the dispersing agent is non-volatile, with Brookfield viscosity lower than 400 cP, pH ranging from 8.5 to 10.5 and density at 20°C ranging from 1.15 to 1.25 g/cm³.

4. The PHOSPHOGYPSUM-BASED ECOLOGICAL PAINT according to claim 1, **characterized in that** the wetting agent exhibits active contents ranging from 24.0 to 28%, density at 20°C ranging from 0.900 to 1.100 g/cm³, pH ranging from 6.00 to 9.00 and is water soluble.

5. The PHOSPHOGYPSUM-BASED ECOLOGICAL PAINT according to claim 1, **characterized in that** the anti-foaming agent exhibits specific weight (25°C) ranging from 0.80 to 0.90, wetness (Karl Fischer) up to 0.5%, and flash point of 140 minutes.

6. The PHOSPHOGYPSUM-BASED ECOLOGICAL PAINT according to claim 1, **characterized in that** the bactericide is composed by hemiacetal and isothiazolinones.

7. The PHOSPHOGYPSUM-BASED ECOLOGICAL PAINT according to claim 1, **characterized in that** the fungicide comprises a stable aqueous dispersion of heterocyclic compounds with isothiazolinones and benzimidazol derivatives.
In compliance with the administrative instructions relating to the PCT, especially with regard to the provisions of rule 46 and article 19, and with the Written Opinion issued by the authority responsible for the international search, we hereby timely submit the alterations in the set of claims, as follows.
Document PCT/BR2012/000320, entitled "PHOSPHOGYPSUM-BASED ECOLOGICAL PAINT", with priority date of May 30, 2012, has a single independent claim, as presented hereinafter.
"PHOSPHOGYPSUM-BASED ECOLOGICAL PAINT, which is the formulation of a phosphogypsum-based acrylic paint, although phosphogypsum is reused in making materials for pre-molded construction, such as blocks, floors, plates for ceilings and partitions, manufacture of cement, manuring complement and soil conditioner, by virtue of the great rate of generation of phosphogypsum residue, the present market is not capable of reusing it properly; at present, only 15% of the phosphogypsum generated in the word, is recycled; the remaining 85% are disposed generally without treatment (Tayibi et al, 2009), in order to solve this drawback, the object of the present patent application has been developed, **characterized by** a phosphogypsum-based acrylic paint (CaSO4 nH2), which has the following chemical composition in mass % (percent) and in the following order: 1^{st} water 47.850% with variation for more or less 15% (fifteen percent); 2^{nd} wetting agent 0.200 percent with variation to more or less 15% (fifteen percent); 3^{rd} dispersing agent 0.400 percent with variation to more or less 15% (fifteen percent); 4^{th} anti-foaming agent 0.100 percent with variation to more or less 15% (fifteen percent) ; 5^{th} bactericide 0.200 percent with variation to more or less 15% (fifteen percent); 6^{th} sodium nitrite 0.30 percent with variation to more or less 15% (fifteen percent); 7 micronized phosphogypsum (from 5 to 10µm) 40.000 percent with variation to more or less 15% (fifteen percent); 8^{th} mixing for two minutes all the substances from 1^{st} to 7th; alkalinizing agent 0.350 percent with variation to more or less 15% (fifteen percent); 10th pigment 2.500 percent with variation to more or less 15% (fifteen percent); 11^{th} butyl glycol 0.750 percent with variation to more or less 15% (fifteen percent); 12^{th} mineral turpentine 1.200 percent with variation to more or less 15% (fifteen percent); 13th dispersing for 20 (twenty) minutes; 14^{th} resin 7.600 percent with variation to more or less 15% (fifteen percent); 15 fungicide 0.300 percent with variation to more or less 15% (fifteen percent); 16th anti-foaming agent 0.150 percent with variation to more or less 15% (fifteen percent); 17th mixing for 2 (two) minutes and slow addition; 18th medium viscosity thickener 0.350 percent with variation to more or less 15% (fifteen percent); 19th rheological thickener 0.600 percent with variation to more or less 15% (fifteen percent), totaling 100% by mass."
Claim 1 has been replaced by modified claims 1 to 7, as presented hereinafter.
1. PHOSPHOGYPSUM-BASED ECOLOGICAL PAINT, **characterized by** comprising from 34.0 to 46.0% phosphogypsum having granulometry ranging from 5.0 to 10.0 µm, from 40.68 to 55.02% water, from 6.37 to 8.62% resin, from 0.17 to 0.23% wetting agent, from 0.34 to 0.46% dispersing agent, from 0.205 to 0.285% anti-foaming agent, from 0.17 to 0.23% bactericide, from 0.0255 to 0.0345% sodium nitrite (NaNo2), from 0.298 to 0.402% of an alkalinizing agent, from 2.125 to 2.875% pigment, from 0.6375 to 0.8625% butyl glycol (C6H14O2), from 1.02 to 1.38% mineral turpentine, from 0.25 to 0.35% fungicide, from 0.12 to 0.17% of an anti-foaming agent, from 0.298 to 0.402% of a medium-viscosity thickener, and from 0.51 to 0.69% of a rheological thickener.
2. The PHOSPHOGYPSUM-BASED ECOLOGICAL PAINT according to claim 1, **characterized in that** the resin comprises an anionic aqueous dispersion of an acrylic styrenated copolymer with Brookfield viscosity ranging from 6000 to 12000 cps, pH ranging from 8.0 to 9.5, and density at 20°C ranging from 1.035 to 1.055 g/cm₃.
3. The PHOSPHOGYPSUM-BASED ECOLOGICAL PAINT according to claim 1, characterized ion that the dispersing agent is non-volatile, with Brookfield viscosity lower than 400 cP, pH ranging from 8.5 to 10.5 and density at 20°C ranging from 1.15 to 1.25 g/cm³.
4. The PHOSPHOGYPSUM-BASED ECOLOGICAL PAINT according to claim 1, **characterized in that** the wetting agent exhibits active contents ranging from 24.0 to 28%, density at 20°C ranging from 0.900 to 1.100 g/cm³, pH ranging from 6.00 to 9.00 and is water soluble.
5. The PHOSPHOGYPSUM-BASED ECOLOGICAL PAINT according to claim 1, **characterized in that** the anti-foaming agent exhibits specific weight (25°C) ranging from 0.80 to 0.90, wetness (Karl Fischer) up to 0.5%, and flash point of 140 minutes.
6. The PHOSPHOGYPSUM-BASED ECOLOGICAL PAINT according to claim 1, **characterized in that** the bactericide is composed by hemiacetal and isothiazolinones.
7. The PHOSPHOGYPSUM-BASED ECOLOGICAL PAINT according to claim 1, **characterized in that** the fungicide comprises a stable aqueous dispersion of heterocyclic compounds with isothiazolinones and benzimidazol derivatives.
Application PCT/2012/000320 describes an acrylic paint formulation with phosphogypsum filler, providing an ecological product that is an alternative to the use of phosphogypsum residues, which represent environmental restrictions on disposal.
Reference WO9858877 does not describe or suggest an acrylic paint composition, but rather only indicates the addition of phosphogypsum to a paint or enamel composition, without presenting this formulation in a sufficiently clear manner, so as to enable one to state that it exhibits the same synergistic effect of the composition of document PCT/2012/000320.
The synergism present in the association of the qualitative elements of the composition presented by document PCT/2012/000320, coupled with the quantitative data exhaustively tested and presented in the specification, discloses, in a sufficient an clear manner, an acrylic paint composition providing a product that eliminates the need to incorporate calcium carbonate, agalmatolite and calcite, such elements being replaced by phosphogypsum in a suitable granulometry.
It is noted that the inventor presents tests evidencing different proportions of the qualitative elements of the composition, which indicate the better conditions of the suspension. As a result of these tests, it was possible to verify the need to alter the phosphogypsum particle size, which brought about the clearing of the texture and the efficiency of the suspension. The chemical recommendation of the acrylic paints enabled one to replace the conventional mineral (calcium carbonate, agalmatolite and calcite) by micronized phosphogypsum.
